# EUROPÄISCHE PATENTSCHRIFT

(11) **EP 3 572 768 B1**
(45) Veröffentlichungstag und Bekanntmachung des Hinweises auf die Patenterteilung: **02.03.2022**
(21) Anmeldenummer: 18173552.3
(22) Anmeldetag: 22.05.2018
(51) Int. Cl.: G01B 11/02, G01B 11/04, G01V 8/20, G01S 7/481, G01S 7/497, G01S 17/04, G01S 17/48, G01S 17/87

(54) **OPTISCHER SENSOR UND VERFAHREN ZUM BETRIEB EINES OPTISCHEN SENSORS**
OPTICAL SENSOR AND METHOD FOR OPERATING AN OPTICAL SENSOR
CAPTEUR OPTIQUE ET PROCÉDÉ DE FONCTIONNEMENT D'UN CAPTEUR OPTIQUE

(43) Veröffentlichungstag der Anmeldung: 27.11.2019
(73) Patentinhaber: Leuze electronic GmbH + Co. KG, 73277 Owen/Teck (DE)
(72) Erfinder: Mullis, Moritz, 73230 Kirchheim unter Teck (DE); Heß, Ralf, 72639 Neuffen (DE); Patz, Jürgen, 72660 Beuren (DE)
(74) Vertreter: Ruckh, Rainer Gerhard

(56) Entgegenhaltungen:
- DE-A1- 19 917 487
- DE-U1-202006 006 482

## Beschreibung

Die Erfindung betrifft einen optischen Sensor und ein Verfahren zum Betrieb eines optischen Sensors.

Derartige optische Sensoren sind insbesondere als Triangulationstaster ausgebildet, das heißt als Lichttaster, welche nach dem Triangulationsprinzip arbeitend Distanzen von Objekten bei Objekterfassungen bestimmen können. Generell weist ein solcher optischer Sensor wenigstens einen Lichtstrahlen emittierenden Sender und einen ortsauflösenden Empfänger, der von einem PSD (position sensitive device) -Element gebildet sein kann, auf. Dabei sind der Sender und der Empfänger in Abstand zueinander angeordnet. Ein ortsauflösender Empfänger in Form eines PSD-Elements weist zwei Ausgänge auf, über welche je ein analoges Ausgangssignal ausgegeben wird. Zur Distanzbestimmung wird üblicherweise der Quotient der Differenz und der Summe der Ausgangssignale gebildet. Auf diese Weise können besonders einfach Distanzen von Objekten bestimmt werden.

Probleme bei Objektdetektionen können dann auftreten, wenn Objekte direkt vor einem Hintergrund erfasst werden müssen. Ein Beispiel hierfür ist die Erkennung von Objekten auf einem Hintergrund in Form eines Förderbands, das am optischen Sensor vorbeibewegt wird. Die Oberfläche des Förderbands weist typischerweise inhomogene optische Eigenschaften, zum Beispiel aufgrund unterschiedlichen wechselnden Farben oder Verschmutzungen auf. Die auf dem Förderband geförderten Objekte können ganz oder teilweise opak, das heißt lichtundurchlässig beziehungsweise ganz oder teilweise transparent, das heißt lichtdurchlässig sein. Weiterhin können die Objekte glänzende, spiegelnde oder diffus reflektierende Oberflächen aufweisen. Schließlich kann es an Objektoberflächen, insbesondere von teiltransparenten Objekten, wie Verpackungen, zu Mehrfachreflektionen von auftreffenden Lichtstrahlen kommen.

All diese Effekte können dazu führen, dass die Objekte vor dem Hintergrund nicht mehr sicher erkannt werden können.

Prinzipiell kann die Nachweisempfindlichkeit dadurch erhöht werden, den optischen Sensor mit mehreren Sendern, die zyklisch einzeln nacheinander aktiviert werden, auszustatten. Jeder Sender bildet dann mit dem ortsauflösenden Empfänger einen Triangulationstaster. Zur Erhöhung der Nachweisempfindlichkeit können die Messwerte der Triangulationstaster gemittelt werden. Jedoch hat es sich gezeigt, dass auch mit einem solchen optischen Sensor noch keine zufriedenstellende Ergebnisse erhalten werden.

Die DE 20 2006 006 482 U1 betrifft einen optischen Sensor zur Erfassung von Objekten in einem Überwachungsbereich, mit mindestens zwei Sendelichtstrahlen emittierenden Sendern, einem ortsauflösenden, Empfangslichtstrahlen empfangenden Empfänger und einer Auswerteeinheit zur Generierung eines Objektfeststellungssignals. Die Sender sind in unterschiedlichen Abständen zum Empfänger derart angeordnet, dass die Strahlachsen der Sender zumindest näherungsweise parallel verlaufen. Die Pegel der Sendelichtstrahlen sind frei vorgebbar. In der Auswerteeinheit werden die Empfangssignale zur Definition einer Tastweite mit einem Schwellwert bewertet.

Die DE 199 17 487 A1 betrifft eine optoelektronische Vorrichtung zum Erfassen von Objekten in einem Überwachungsbereich mit einem Sendelichtstrahlen emittierenden Sender, einem Empfangslichtstrahlen empfangenden, ein Nahsignal oder Fernsignal abgebenden ortsauflösenden Empfänger, und einer Auswerteeinheit, in welcher die Erfassung von Objekten der Quotient des Nah- und Fernsignals gebildet wird. Zur Quotientenbildung wird bei auf konstantem Wert geregelter Summe von Nah- und Fernsignal die Differenz zwischen dem Nah- und Fernsignal gebildet.

Der Erfindung liegt die Aufgabe zugrunde, einen optischen Sensor und ein Verfahren bereitzustellen, mittels dem eine sichere Detektion von Objekten vor einem Hintergrund ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit mehreren Lichtstrahlen emittierenden Sender. Der optische Sensor ist so konfiguriert, dass die Sender jeweils zyklisch einzeln aktiviert sind und mit einem ortsauflösenden Empfänger, welcher zwei Anschlüsse aufweist, über welche jeweils ein analoges Ausgangssignal ausgebbar ist. Jeder Sender bildet mit dem ortsauflösenden Empfänger einen Triangulationstaster. Eine Auswerteeinheit ist zur Auswertung der Ausgangssignale des ortsauflösenden Empfängers vorgesehen. Der optische Sensor ist zur Detektion von Objekten vor einem Hintergrund ausgebildet. Die Auswerteeinheit ist so konfiguriert, dass aus den Ausgangssignalen der Triangulationstaster eine Differenzsumme und eine Quotientensumme gebildet wird, wobei die Differenzsumme die Summe der Beträge der Differenzwerte der aktuellen Ausgangssignale und eines Mittelwerts des jeweiligen Ausgangssignals aller Triangulationstaster ist. Die Quotientensumme ist die Summe der Quotienten der Differenzen und Summen der Ausgangssignale aller Triangulationstaster. Die Quotientensumme und die Differenzsumme bilden die Koordinatenachsen eines zweidimensionalen Vektorraums, dass der optische Sensor einen Einlernvorgang ausführen kann, bei welchem der Hintergrund alleine mit den Triangulationstastern mehrfach vermessen wird und dass die Auswerteeinheit konfiguriert ist. Für die dabei erhaltenen Messwerte durch Berechnung der Quotientensumme und Differenzsumme werden jeweils Messpunkte im Vektorraum erhalten und für diese eine konvexe Hülle gebildet. Während eines auf den Einlernvorgang folgenden Arbeitsbetriebs ist ein Objekt vor dem Hintergrund dadurch erkannt, dass dessen Messpunkte außerhalb der konvexen Hülle liegen.

Die Erfindung betrifft weiterhin ein Verfahren zum Betrieb eines optischen Sensors.

Die zyklisch einzeln aktivierten Sender bilden jeweils mit dem ortsauflösenden Empfänger einen Triangulationstaster. Mit dem so ausgebildeten optischen Sensor können Objekte vor einem Hintergrund hochgenau und reproduzierbar erfasst werden, und zwar auch für inhomogene, gegebenenfalls variierende Oberflächeneigenschaften des Hintergrunds und auch für unterschiedliche Objektbeschaffenheiten. Insbesondere können mit dem erfindungsgemäßen optischen Sensor ganz oder teilweise opake beziehungsweise transparente Objekte erfasst werden. Dabei können generell Objekte erfasst werden, unabhängig davon, ob sie diffus reflektierende, spiegelnde oder glänzende Oberflächen aufweisen.

Der Grundgedanke der Erfindung besteht dabei darin, dass für jeweils einen Zeitraum, der vorteilhaft aber nicht zwingend von einem Zyklus gebildet ist, in welchem alle Sender des optischen Sensors nacheinander aktiviert werden, sowohl die Differenzsumme als auch die Quotientensumme für die Messwerte aller Triangulationstaster gebildet wird.

Die Differenzsumme und die Quotientensumme bilden dabei die Koordinatenachsen eines zweidimensionalen Vektorraums, in welchem die Messwerte der Triangulationstaster als Messpunkte ausgewertet werden.

Wesentlich hierbei ist, dass in einem Einlernvorgang mit den Triangulationstastern allein der Hintergrund, also ohne Objekte, detektiert wird. Für die dabei erhaltenen Ausgangssignale des ortsauflösenden Empfängers werden die Differenzsumme und die Quotientensumme ermittelt, welche dann einzelne Messpunkte in dem genannten zweidimensionalen Vektorraum bilden.

Für diese Messpunkte im zweidimensionalen Raum wird erfindungsgemäß die konvexe Hülle gebildet. Generell ist die konvexe Hülle einer Teilmenge X eines reellen oder komplexen Vektorraums definiert als der Schnitt aller konvexen Obermengen von X. Sie ist selbst konvex und damit die kleinste konvexe Menge, die X enthält. Die Bildung der konvexen Hülle ist ein Hüllenoperator.

Durch die Gruppierung von Messpunkten in dem von der Differenzsumme und der Quotientensumme aufgespannten zweidimensionalen Vektorraum und durch die Bildung der konvexen Hülle für die allein vom Hintergrund stammenden Messpunkte, können überraschend sicher und reproduzierbar Objekte vom Hintergrund unterschieden werden, da nämlich die von Objekten stammenden Messpunkte außerhalb der konvexen Hülle liegen.

Besonders vorteilhaft wird während des Einlernvorgangs mit zunehmender Anzahl von Messpunkten die konvexe Hülle iterativ bestimmt.

Je mehr Messpunkte zur konvexen Hülle beitragen, desto sicherer kann dann im auf den Einlernvorgang folgenden Arbeitsbetrieb ein Objekt von dem Hintergrund unterschieden werden.

Die Unterscheidung zwischen Objekt und Hintergrund kann besonders vorteilhaft dadurch noch verbessert werden, dass durch Streckung der konvexen Hülle mit einem ersten Streckungsfaktor eine Ausschalthülle gebildet ist, und dass durch Streckung der konvexen Hülle mit einem zweiten Streckungsfaktor, der größer ist als der erste Streckungsfaktor, eine Einschalthülle gebildet ist.

Dabei sind die Streckungsfaktoren abhängig von den Standardabweichungen der im Einlernvorgang ermittelten Messpunkte, können aber auch anwendungsspezifisch einer vorher ermittelten Konstante gleichgesetzt werden.

Die Objektdetektion erfolgt dann derart, dass während des Arbeitsbetriebs für ermittelte Messwerte der Triangulationstaster durch Berechnung der Quotientensumme und Differenzsumme Messpunkte ermittelt werden, die mit der Einschalthülle und Ausschalthülle bewertet werden. Bei innerhalb der Ausschalthülle liegenden Messpunkten gilt der Hintergrund als erkannt und bei außerhalb der Einschalthülle liegenden Messpunkten gilt ein Objekt vor dem Hintergrund als erkannt.

Da die Streckungsfaktoren in Abhängigkeit der Standardabweichungen der Messpunkte im Einlernvorgang gebildet sind, sind bei der Bildung der Ausschalthülle und Einschalthülle die Streuungen dieser Messpunkte mit berücksichtigt.

Dies führt dazu, dass die vom Hintergrund stammenden Messpunkte mit sehr hoher Sicherheit innerhalb der Ausschalthülle liegen und mit dementsprechend hoher Sicherheit ein von einem Objekt kommender Messpunkt außerhalb der Einschalthülle liegt. Damit liefern die Ausschalthülle und die Einschalthülle ein sicheres Kriterium dafür, ob ein Messpunkt von einem Objekt oder von dem Hintergrund stammt.

Gemäß einer vorteilhaften Ausgestaltung der Erfindung wird während des Arbeitsbetriebs in der Auswerteeinheit in Abhängigkeit der Messwerte der Triangulationstaster ein binäres Schaltsignal generiert, dessen Schaltzustände angeben, ob eine Detektion des Hintergrunds oder eine Detektion eines Objekts vor dem Hintergrund vorliegt.

In diesem Fall bilden die Ausschalthülle und die Einschalthülle eine Schalthysterese für das Schaltsignal aus.

Mit der so gebildeten Schalthysterese wird ein fehlerfreies Schaltverhalten des optischen Sensors und damit eine sichere Objektdetektion gewährleistet.

Gemäß einer konstruktiv vorteilhaften Ausgestaltung ist der ortsauflösende Empfänger von einem PSD-Element gebildet.

Weiterhin sind die Sender entlang einer Geraden angeordnet, die senkrecht zur Längsachse des ortsauflösenden Empfängers verläuft.

Dabei sind die Sender dicht nebeneinanderliegend angeordnet, so dass diese etwa in gleichen Abständen zum PSD liegen. Damit werden für alle Triangulationstaster im Wesentlichen dieselben Merkmale bei einer Objektdetektion erhalten.

Weiterhin vorteilhaft emittieren die Sender Sendelichtimpulse.

Durch den Pulsbetrieb können die Sender besonders einfach einzeln zyklisch nacheinander aktiviert werden. Während einer Aktivierung kann ein Sender einen einzelnen Sendelichtimpuls oder eine Folge von Sendelichtimpulsen emittieren. Die Sender können dabei Licht gleicher oder unterschiedlicher Weise emittieren.

Weiter vorteilhaft werden die Ausgangssignale des ortsauflösenden Empfängers mit einem Analog-Digital-Wandler abgetastet, wobei die vom Analog-Digital-Wandler generierten Signale der Auswerteeinheit zugeführt sind.

Damit werden der Auswerteeinheit digitalisierte Signale zur Verfügung gestellt, die dort ohne weiteres weiterverarbeitet werden können.

Der erfindungsgemäße optische Sensor kann für unterschiedliche Applikationen eingesetzt werden.

Insbesondere kann dem optischen Sensor ein statischer Hintergrund zugeordnet sein.

Weiterhin kann dem optischen Sensor ein relativ zu diesem bewegter Hintergrund zugeordnet sein.

Dabei kann insbesondere der Hintergrund von einem Förderband gebildet sein.

Im Einlernvorgang wird dann vorteilhaft das gesamte Förderband vermessen, wodurch im nachfolgenden Arbeitsbetrieb eine besonders sichere Objektdetektion gewährleistet ist.

Dieses Verfahren kann dadurch noch erweitert werden, dass auch zu detektierende Objekte eingelernt werden und für diese eine konvexe Hülle generiert wird.

Die Erfindung wird im Folgenden anhand der Zeichnungen erläutert. Es zeigen:
- Figur 1: Blockschaltbild eines Ausführungsbeispiels des erfindungsgemäßen optischen Sensors.
- Figur 2: Sender-/Empfängeranordnung des optischen Sensors gemäß Figur 1 in einer Draufsicht.
- Figur 3: Flussdiagramm zur Bestimmung einer konvexen Hülle für den optischen Sensor gemäß Figur 1.
- Figur 4a - b: Diagramme für einzelne Schritte im Flussdiagramm.

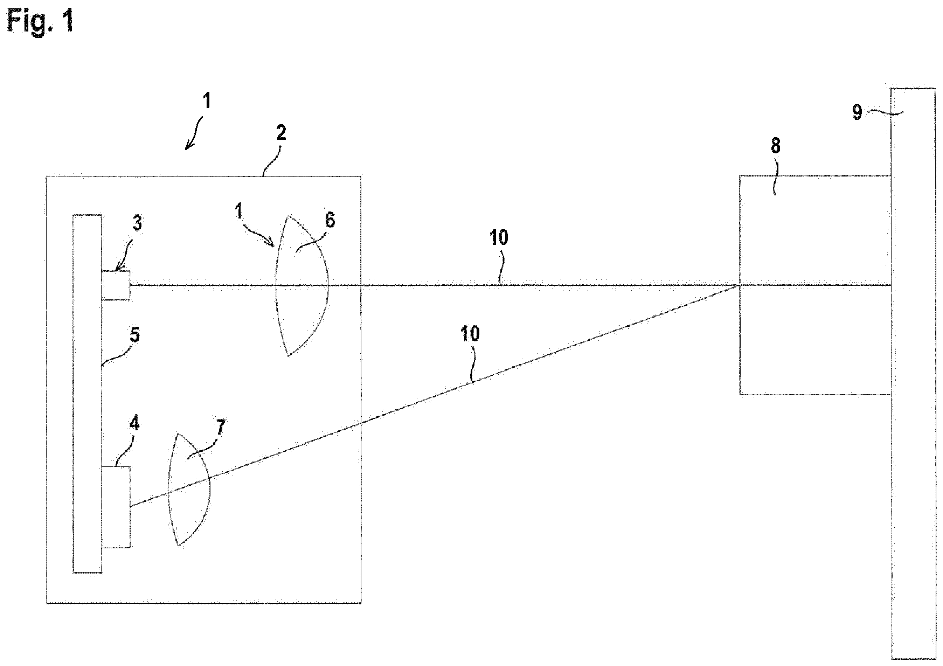

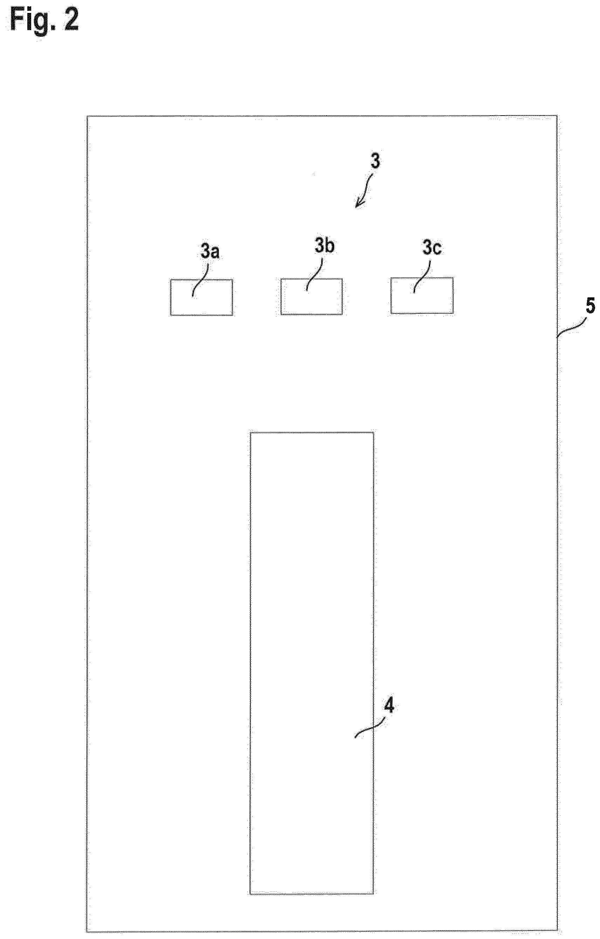

Die Figuren 1 und 2 zeigen den Aufbau eines Ausführungsbeispiels des erfindungsgemäßen optischen Sensors 1. Die Komponenten des optischen Sensors 1 sind in einem Gehäuse 2 integriert. Der optische Sensor 1 umfasst eine Sendereinheit 3 mit drei Sendern 3a - 3c in Form von Leuchtdioden und einen ortsauflösenden Empfänger 4 in Form eines PSD-Elements, welches in bekannter Weise an jedem längsseitigen Ende einen Anschluss zur Ausgabe eines analogen Ausgangssignals aufweist. Natürlich kann auch eine andere Zahl N > 1 von Sendern 3a - c vorgesehen sein. Die Sender 3a - c liegen dicht nebeneinander auf einer Geraden, die senkrecht zur Längsachse des PSD-Elements orientiert ist, in Abstand zum PSD-Element. Damit bildet jeder Sender 3a - c mit dem PSD-Element einen Triangulationstaster.

Die Sender 3a - c und der ortsauflösende Empfänger 4 sind auf einer Leiterplatte 5 angeordnet, auf welcher auch eine Auswerteeinheit und zwei Analog-Digital-Wandler angeordnet sind (in Figur 1 nicht dargestellt). Vom PSD-Element generierte analoge Ausgangssignale werden in den Analog-Digital-Wandlern digitalisiert und in die Auswerteeinheit, die von einem Mikroprozessor oder dergleichen gebildet sein kann, eingelesen. In der Auswerteeinheit erfolgt dann eine Auswertung der digitalisierten Ausgangssignale zur Durchführung von Objekterkennungen. Weiterhin erfolgt mit der Auswerteeinheit eine Ansteuerung der Sender 3a - c derart, dass diese einzeln nacheinander zyklisch aktiviert werden.

Wie aus Figur 1 ersichtlich, ist der Senderanordnung eine Sendeoptik 6 zugeordnet. Weiterhin ist dem ortsauflösenden Empfänger 4 eine Empfangsoptik 7 zugeordnet. Mit dem Sensor 1 wird im dargestellten Fall ein Objekt 8 detektiert, das auf einem einen Hintergrund bildenden Förderband 9 angeordnet ist. Ist auf dem Förderband 9 kein Objekt 8 angeordnet, wird das Förderband 9 detektiert.

Wie Figur 1 zeigt, werden von der Sendereinheit 3 emittierte Lichtstrahlen 10 durch die Sendeoptik 6 geführt, gelangen zum Objekt 8, werden dann an diesem reflektiert und gelangen dann über die Empfangsoptik 7 zum ortsauflösenden Empfänger 4. Entsprechend dem Auftreffpunkt der Lichtstrahlen 10 auf dem PSD-Element, werden bestimmte Ausgangssignale an dessen Anschlüssen erhalten, die in der Auswerteeinheit als Maß für die Objektdistanz ausgewertet werden.

Die Sender 3a - c, die Licht gleicher oder unterschiedlicher Wellenlängen emittieren können, werden im Pulsbetrieb betrieben, so dass diese Lichtstrahlen 10 in Form von Sendelichtimpulsen emittieren. Ist ein Sender für ein Zeitintervall aktiviert, kann dieser einen einzelnen Sendelichtimpuls oder eine Folge von Sendelichtimpulsen emittieren.

Durch die zyklische Einzelaktivierung wird das Objekt 8 mit den Sendelichtimpulsen aller Sender 3a - c detektiert, so dass Distanzinformationen für alle drei Triangulationstaster für eine Objektdetektion zur Verfügung stehen.

Erfindungsgemäß werden aus den Ausgangssignalen des PSD-Elements, die bei Aktivierung der drei Sender 3a - c gewonnen werden, als Variable eine Differenzsumme und eine Quotientensumme gebildet.

Die Differenzsumme ist durch die Summe aller Einzel-Differenzen von Ausgangssignalen des PSD für alle Triangulationstaster definiert. Die Einzeldifferenz Dᵢⱼ ist dabei jeweils definiert als Dᵢⱼ = | Aᵢⱼ - <Aᵢⱼ> |, wobei Aᵢⱼ ein aktuelles Ausgangssignal des PSD-Elements bildet und <Aᵢⱼ> der Mittelwert dieses Ausgangssignals, gemittelt über eine Anzahl zuvor bestimmter Messwerte beim Teachvorgang, ist. Die Mittelwerte werden vorteilhaft zu Beginn des nachstehend erläuterten Einlernvorgangs gebildet.

Die Differenzsumme wird dann durch Aufsummierung der Einzel-Differenzen Dij über beide Ausgangssignale j = 1, 2 des PSD-Elements und über alle drei aktivierte Sender i = 1, 2, 3 gebildet.

Die Quotientensumme ist die Summe aller Einzel-Quotientensignale Qi für alle aktivierten Sender 3a - c.

Dabei ist ein Einzel-Quotientensignal Qᵢ definiert als Qᵢ = (Aᵢ₁ - Aᵢ₂) / (Aii + Aᵢ₂), wobei Aᵢ₁, Aᵢ₂ die beiden Ausgangssignale des PSD-Elements für den i-ten aktivierten Sender 3a - c sind. Generell kann die oben genannte Gleichung auch dahingehend erweitert sein, dass die einzelnen Ausgangssignale Aᵢⱼ auf Offset-Werte bezogen sind.

Erfindungsgemäß wird in einem Einlernvorgang das Förderband 9 allein, das heißt ohne Objekt 8, mit dem optischen Sensor 1 vermessen, wobei im Einlernvorgang die sich bewegenden Elemente des Förderbands 9 komplett am optischen Sensor 1 vorbeibewegt werden.

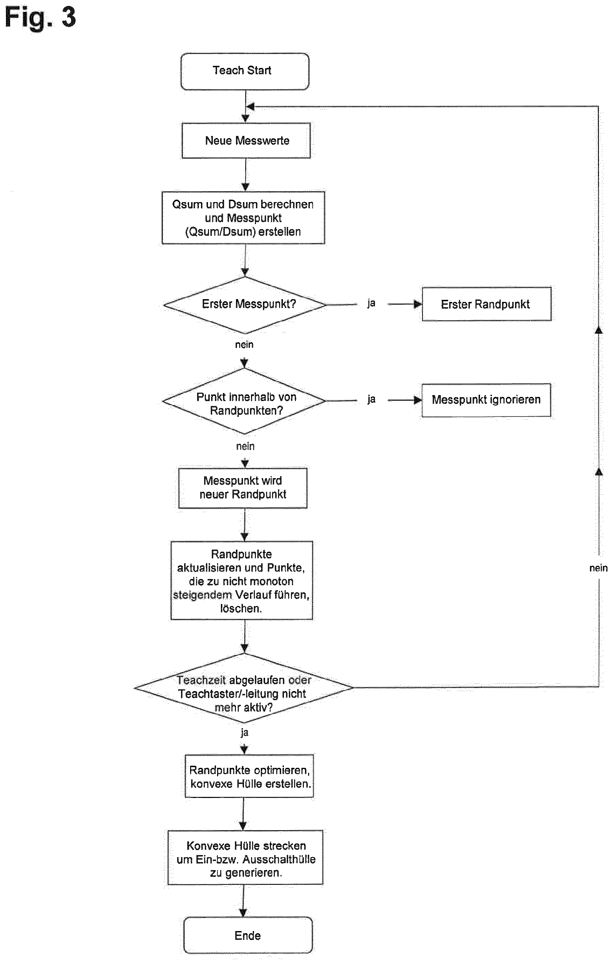

Die Auswertung der Messwerte ist in dem Flussdiagramm von Figur 3 beschrieben und mit den Diagrammen veranschaulicht.

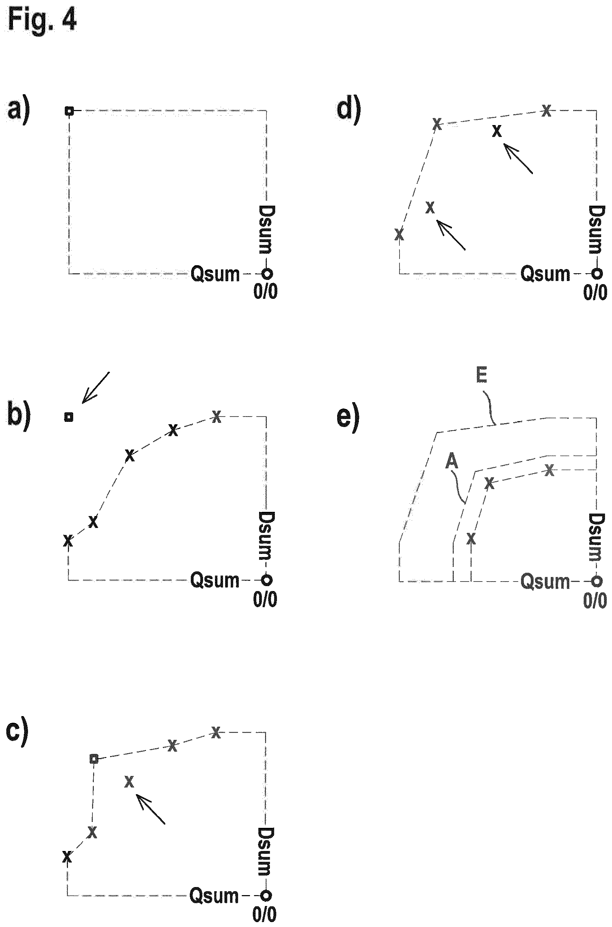

Für die nach Beginn des Einlernvorgangs (Teach Start) ermittelten Messwerte für die Triangulationstaster werden die Quotientensumme und Differenzsumme berechnet und in einem von diesen Variablen gebildeten zweidimensionalen Vektorraum eingetragen, wie die Figuren 4a - e zeigen. Die Variablen Differenzsumme und Quotientensumme, in den Figuren 4a - 4 mit Dsum und Qsum bezeichnet, bilden die Koordinatenachsen des zweidimensionalen Vektorraums.

Werden mit den Triangulationstastern des optischen Sensors 1 neue Messwerte erfasst, werden für diese die Werte Quotientensumme und Differenzsumme berechnet, so dass ein Messpunkt im zweidimensionalen Vektorraum erhalten wird. Für die Gesamtheit dieser Messpunkte wird die konvexe Hülle berechnet, wie im Folgenden anhand der Figuren 3 und 4a - e veranschaulicht.

Wie in Figur 4a veranschaulicht und in Figur 3 beschrieben, wird ein erster Messpunkt als Randpunkt übernommen. Daraufhin werden neue Messpunkte ermittelt und dahingehend geprüft, ob sie weitere Randunkte der Menge erfasster Messpunkte bilden oder innerhalb der bestehenden Randpunkte liegen. Im ersten Fall wird der Messpunkt als neuer Randpunkt übernommen (in Figur 4b mit einem Pfeil gekennzeichneter Messpunkt). Im zweiten Fall wird der Messpunkt ignoriert (in Figur 4c mit einem Pfeil gekennzeichneter Messpunkt).

Wenn der Einlernvorgang beendet ist (Teachzeit abgelaufen oder Teachtaster/- leitung nicht mehr aktiv) werden die zuvor ermittelten Randpunkte optimiert, um dann aus diesen eine konvexe Hülle zu bilden. Die Optimierung kann durch eine Elimination bestimmter Randpunkte erfolgen, damit sich aus den verbleibenden Randpunkten eine stetige Funktion als konvexe Hülle ableiten lässt. Die so erhaltene konvexe Hülle ist in Figur 4d dargestellt. Da die konvexe Hülle von den beiden Koordinatenachsen des Vektorraums begrenzt ist und in einem Quadraten des Koordinatensystems liegt, kann die konvexe Hülle als quadkonvexe Hülle bezeichnet werden.

Wie in Figur 4e dargestellt, wird durch Streckung der konvexen Hülle mit einem ersten Streckungsfaktor eine Ausschalthülle erhalten (in Figur 4e mit A bezeichnet). Weiterhin wird durch Streckung der konvexen Hülle mit einem zweiten Streckungsfaktor, der größer als der erste Streckungsfaktor ist, eine Einschalthülle erhalten, die in Figur 4e mit E bezeichnet ist. Die Streckungsfaktoren sind abhängig von den Standardabweichungen der Messpunkte gewählt, oder sind anwendungsspezifische Konstanten.

Während des auf den Einlernvorgang folgenden Arbeitsbetriebs wird abhängig von den mit den Triangulationstastern generierten Messwerten in der Auswerteeinheit ein binäres Schaltsignal generiert, dessen Schaltzustände angeben, ob ein Objekt 8 vor dem Hintergrund erkannt wurde oder ob nur der Hintergrund erkannt wurde.

Dabei bilden die Einschalthülle und Ausschalthülle eine Schalthysterese und damit auch die Kriterien, ob eine Objektdetektion vorliegt oder nicht.

Die Objektdetektion im Arbeitsbetrieb des optischen Sensors 1 erfolgt derart, dass die für die drei Triangulationstaster erhaltenen Messwerte, die innerhalb eines Zyklus der Aktivierung der drei Sender 3a - c gewonnen werden, die Quotientensumme und Differenzsumme berechnet werden und so ein Messpunkt im zweidimensionalen Vektorraum erhalten wird. Liegt der Messpunkt innerhalb der Ausschalthülle generiert der optische Sensor 1 ein Schaltsignal mit einem Schaltzustand der angibt, dass nur der Hintergrund detektiert wurde, dass also kein Objekt 8 vorhanden ist. Liegt der Messpunkt außerhalb der Einschalthülle generiert der optische Sensor 1 ein Schaltsignal mit einem Schaltzustand der angibt, dass ein Objekt 8 vorhanden ist.

Zur Erhöhung der Robustheit der Detektion können die Messwerte vor der Bewertung durch die Ein- bzw. Ausschalthülle noch durch Filter vorverarbeitet werden (zum Beispiel einem gleitenden Mittelwertfilter). Nach der Bewertung durch die Hüllen kann zudem noch ein Filter nachgeschaltet werden.

### Bezugszeichenliste

- (1): optischer Sensor
- (2): Gehäuse
- (3): Sendereinheit
- (3a - c): Sender
- (4): ortsauflösender Empfänger
- (5): Leiterplatte
- (6): Sendeoptik
- (7): Empfangsoptik
- (8): Objekt
- (9): Förderband
- (10): Lichtstrahlen

## Patentansprüche

1. Optischer Sensor (1) mit mehreren Lichtstrahlen emittierenden Sendern (3a - c), wobei der optische Sensor (1) so konfiguriert ist, dass die Sender (3a-c) jeweils zyklisch einzeln aktiviert sind und mit einem ortsauflösenden Empfänger, welcher zwei Anschlüsse aufweist, über welche jeweils ein analoges Ausgangssignal ausgebbar ist, wobei jeder Sender (3a - c) mit dem ortsauflösenden Empfänger (4) einen Triangulationstaster bildet, und wobei eine Auswerteeinheit zur Auswertung der Ausgangssignale des ortsauflösenden Empfängers (4) vorgesehen ist, **dadurch gekennzeichnet, dass** der optische Sensor (1) zur Detektion von Objekten (8) vor einem Hintergrund ausgebildet ist, dass die Auswerteeinheit so konfiguriert ist, dass aus den Ausgangssignalen der Triangulationstaster eine Differenzsumme und eine Quotientensumme gebildet wird, wobei die Differenzsumme die Summe der Beträge der Differenzwerte der aktuellen Ausgangssignale und eines Mittelwerts des jeweiligen Ausgangssignals aller Triangulationstaster ist, und wobei die Quotientensumme die Summe der Quotienten der Differenzen und Summen der Ausgangssignale aller Triangulationstaster ist, dass die Quotientensumme und die Differenzsumme die Koordinatenachsen eines zweidimensionalen Vektorraums bilden, dass der optische Sensor (1) einen Einlernvorgang ausführen kann, bei welchem der Hintergrund alleine mit den Triangulationstastern mehrfach vermessen wird und dass die Auswerteeinheit konfiguriert ist, für die dabei erhaltenen Messwerte durch Berechnung der Quotientensumme und Differenzsumme jeweils Messpunkte im Vektorraum erhalten werden und für diese eine konvexe Hülle gebildet wird, und dass während eines auf den Einlernvorgang folgenden Arbeitsbetriebs ein Objekt (8) vor dem Hintergrund dadurch erkannt ist, dass dessen Messpunkte außerhalb der konvexen Hülle liegen.

2. Optischer Sensor (1) nach Anspruch 1, **dadurch gekennzeichnet, dass** während des Einlernvorgangs mit zunehmender Anzahl von Messpunkten die konvexe Hülle iterativ bestimmt wird.

3. Optischer Sensor (1) nach einem der Ansprüche 1 oder 2, **dadurch gekennzeichnet, dass** durch Streckung der konvexen Hülle mit einem ersten Streckungsfaktor eine Ausschalthülle gebildet ist, und dass durch Streckung der konvexen Hülle mit einem zweiten Streckungsfaktor, der größer ist als der erste Streckungsfaktor, eine Einschalthülle gebildet ist.

4. Optischer Sensor (1) nach Anspruch 3, **dadurch gekennzeichnet, dass** während des Arbeitsbetriebs für ermittelte Messwerte der Triangulationstaster durch Berechnung der Quotientensumme und Differenzsumme Messpunkte ermittelt werden, die mit der Einschalthülle und Ausschalthülle bewertet werden, wobei bei innerhalb der Ausschalthülle liegenden Messpunkten der Hintergrund als erkannt gilt und bei außerhalb der Einschalthülle liegenden Messpunkten ein Objekt (8) vor dem Hintergrund als erkannt gilt.

5. Optischer Sensor (1) nach einem der Ansprüche 3 oder 4, **dadurch gekennzeichnet, dass** die Streckungsfaktoren abhängig von den Standardabweichungen der im Einlernvorgang ermittelten Messpunkte sind.

6. Optischer Sensor (1) nach einem der Ansprüche 1 bis 5, **dadurch gekennzeichnet, dass** während des Arbeitsbetriebs in der Auswerteeinheit in Abhängigkeit der Messwerte der Triangulationstaster ein binäres Schaltsignal generiert wird, dessen Schaltzustände angeben, ob eine Detektion des Hintergrunds oder eine Detektion eines Objekts (8) vor dem Hintergrund vorliegt.

7. Optischer Sensor (1) nach Anspruch 6, **dadurch gekennzeichnet, dass** die Ausschalthülle und die Einschalthülle eine Schalthysterese für das Schaltsignal ausbilden.

8. Optischer Sensor (1) nach einem der Ansprüche 1 bis 7, **dadurch gekennzeichnet, dass** der ortsauflösende Empfänger (4) von einem PSD-Element gebildet ist.

9. Optischer Sensor (1) nach einem der Ansprüche 1 bis 8, **dadurch gekennzeichnet, dass** die Sender (3a - c) entlang einer Geraden angeordnet sind, die senkrecht zur Längsachse des ortsauflösenden Empfängers (4) verläuft.

10. Optischer Sensor (1) nach einem der Ansprüche 1 bis 9, **dadurch gekennzeichnet, dass** die Sender (3a - c) Sendelichtimpulse emittieren.

11. Optischer Sensor (1) nach einem der Ansprüche 1 bis 10, **dadurch gekennzeichnet, dass** die Ausgangssignale des ortsauflösenden Empfängers (4) mit einem Analog-Digital-Wandler abgetastet werden, wobei die vom Analog-Digital-Wandler generierten Signale der Auswerteeinheit zugeführt sind.

12. Optischer Sensor (1) nach einem der Ansprüche 1 bis 11, **dadurch gekennzeichnet, dass** ein statischer Hintergrund vorgesehen ist.

13. Optischer Sensor (1) nach einem der Ansprüche 1 bis 11, **dadurch gekennzeichnet, dass** ein relativ zu diesem bewegter Hintergrund vorgesehen ist.

14. Optischer Sensor (1) nach Anspruch 13, **dadurch gekennzeichnet, dass** der Hintergrund von einem Förderband (9) gebildet ist.

15. Verfahren zum Betrieb eines optischen Sensor (1) gemäß Anspruch 1, **dadurch gekennzeichnet, dass** der optische Sensor (1) Objekte (8) vor einem Hintergrund detektiert, dass in der Auswerteeinheit aus den Ausgangssignalen der Triangulationstaster eine Differenzsumme und eine Quotientensumme gebildet wird, wobei die Differenzsumme die Summe der Beträge der Differenzwerte der aktuellen Ausgangssignale und eines Mittelwerts des jeweiligen Ausgangssignals aller Triangulationstaster ist, und wobei die Quotientensumme die Summe der Quotienten der Differenzen und Summen der Ausgangssignale aller Triangulationstaster ist, dass die Quotientensumme und die Differenzsumme die Koordinatenachsen eines zweidimensionalen Vektorraum bilden, dass in einem Einlernvorgang der Hintergrund alleine mit dem Triangulationstaster mehrfach vermessen wird und für die dabei erhaltenen Messwerte durch Berechnung der Quotientensumme und Differenzsumme jeweils Messpunkte im Vektorraum erhalten werden
und für diese eine konvexe Hülle gebildet wird, und dass während eines auf den Einlernvorgang folgenden Arbeitsbetriebs ein Objekt (8) vor dem Hintergrund dadurch erkannt wird, dass dessen Messpunkte außerhalb der konvexen Hülle liegen.

## Claims

1. An optical sensor (1) having a plurality of transmitters (3a-c) which emit light beams, the optical sensor (1) being configured in such a way that the transmitters (3a-c) are each cyclically activated individually and having a location-resolving receiver which has two connections via which an analogue output signal can be output in each case, each transmitter (3a-c) forming a triangulation probe with the location-resolving receiver (4) and wherein an evaluation unit is provided for evaluating the output signals of the location-resolving receiver (4), **characterised in that** the optical sensor (1) is designed for detecting objects (8) against a background, **in that** the evaluation unit is configured in such a way that a difference sum and a quotient sum are formed from the output signals of the triangulation scanners, wherein the difference sum is the sum of the amounts of the difference values of the current output signals and an average value of the respective output signal of all triangulation probes, and wherein the quotient sum is the sum of the quotients of the differences and sums of the output signals of all triangulation probes, that the quotient sum and the difference sum form the coordinate axes of a two-dimensional vector space, that the optical sensor (1) can execute a teach-in process, in which the background is measured several times using the triangulation probes alone, and **in that** the evaluation unit is configured to obtain measurement points in the vector space for the measurement values obtained in the process by calculating the quotient sum and difference sum in each case and to form a convex envelope for these, and **in that**, during an operating mode following the teach-in process, an object (8) is detected in front of the background by virtue of the fact that its measurement points lie outside the convex envelope.

2. An optical sensor (1) according to claim 1, **characterised in that** during the teach-in process the convex envelope is determined iteratively with an increasing number of measuring points.

3. An optical sensor (1) according to one of claims 1 or 2, **characterised in that** a turn-off envelope is formed by stretching the convex envelope with a first stretching factor, and **in that** a turn-on envelope is formed by stretching the convex envelope with a second stretching factor which is greater than the first stretching factor.

4. An optical sensor (1) according to claim 3, **characterised in that**, during the operating mode, measurement points are determined for determined measurement values of the triangulation probe by calculating the quotient sum and difference sum, which measurement points are evaluated with the switch-on envelope and switch-off envelope, the background being regarded as detected in the case of measurement points lying within the switch-off envelope and an object (8) in front of the background being regarded as detected in the case of measurement points lying outside the switch-on envelope.

5. An optical sensor (1) according to one of claims 3 or 4, **characterised in that** the elongation factors are dependent on the standard deviations of the measuring points determined in the teach-in process.

6. An optical sensor (1) according to one of claims 1 to 5, **characterised in that** during operation a binary switching signal is generated in the evaluation unit as a function of the measured values of the triangulation scanners, the switching states of which signal indicate whether there is a detection of the background or a detection of an object (8) in front of the background.

7. An optical sensor (1) according to claim 6, **characterised in that** the switch-off envelope and the switch-on envelope form a switching hysteresis for the switching signal.

8. An optical sensor (1) according to any one of claims 1 to 7, **characterised in that** the spatial resolution receiver (4) is formed by a PSD element.

9. An optical sensor (1) according to any one of claims 1 to 8, **characterised in that** the transmitters (3 a - c) are arranged along a straight line perpendicular to the longitudinal axis of the position-resolving receiver (4).

10. An optical sensor (1) according to any one of claims 1 to 9, **characterised in that** the transmitters (3 a - c) emit transmitted light pulses.

11. An optical sensor (1) according to any one of claims 1 to 10, **characterised in that** the output signals of the position-resolving receiver (4) are sampled with an analogue-to-digital converter, the signals generated by the analogue-to-digital converter being fed to the evaluation unit

12. An optical sensor (1) according to any one of claims 1 to 11, **characterised in that** a static background is provided.

13. An optical sensor (1) according to any one of claims 1 to 11, **characterised in that** a background moving relative thereto is provided.

14. An optical sensor (1) according to claim 13, **characterised in that** the background is formed by a conveyor belt (9).

15. A method for operating an optical sensor (1) according to claim 1, **characterised in that** the optical sensor (1) detects objects (8) against a background, **in that** a difference sum and a quotient sum are formed in the evaluation unit from the output signals of the triangulation sensors, wherein the difference sum is the sum of the amounts of the difference values of the current output signals and an average value of the respective output signal of all triangulation scanners, and wherein the quotient sum is the sum of the quotients of the differences and sums of the output signals of all triangulation scanners, **in that** the quotient sum and the difference sum form the coordinate axes of a two-dimensional vector space, **in that**, in a teach-in operation, the background alone is measured a plurality of times using the triangulation probe and, for the measurement values obtained in the process, measurement points are obtained in the vector space by calculating the quotient sum and difference sum in each case and a convex envelope is formed for these, and **in that**, during an operating mode following the teach-in operation, an object (8) is detected in front of the background by virtue of the fact that its measurement points lie outside the convex envelope.

## Revendications

1. Capteur optique (1) avec plusieurs émetteurs (3a-c) qui émettent des rayons lumineux, le capteur optique (1) étant configuré de telle sorte que les émetteurs (3a-c) sont chacun activés individuellement de manière cyclique et avec un récepteur de localisation qui présente deux connexions par lesquelles un signal de sortie analogique peut être émis, chaque émetteur (3a-c) formant une sonde de triangulation avec le récepteur de localisation (4) et une unité d'évaluation étant prévue pour évaluer les signaux de sortie du récepteur de localisation (4), **caractérisé en ce que** le capteur optique (1) est conçu pour la détection d'objets (8) sur un arrière-plan, **en ce que** l'unité d'évaluation est configurée de telle sorte qu'une somme de différence et une somme de quotient sont formées à partir des signaux de sortie des scanners de triangulation, la somme de différence étant la somme des montants des valeurs de différence des signaux de sortie actuels et d'une valeur moyenne du signal de sortie respectif de toutes les sondes de triangulation, et dans lequel la somme des quotients est la somme des quotients des différences et des sommes des signaux de sortie de toutes les sondes de triangulation, que la somme des quotients et la somme des différences forment les axes de coordonnées d'un espace vectoriel bidimensionnel, que le capteur optique (1) peut exécuter un processus d'apprentissage, dans lequel l'arrière-plan est mesuré plusieurs fois en utilisant uniquement les sondes de triangulation, et **en ce que** l'unité d'évaluation est configurée pour obtenir des points de mesure dans l'espace vectoriel pour les valeurs de mesure obtenues au cours du processus par calcul de la somme des quotients et de la somme des différences et pour former une enveloppe convexe pour ceux-ci, et **en ce que**, pendant un mode de fonctionnement suivant le processus d'apprentissage, un objet (8) est détecté devant l'arrière-plan du fait que ses points de mesure se trouvent en dehors de l'enveloppe convexe.

2. Capteur optique (1) selon la revendication 1, **caractérisé en ce que** pendant le processus d'apprentissage, l'enveloppe convexe est déterminée de manière itérative avec un nombre croissant de points de mesure.

3. Capteur optique (1) selon l'une des revendications 1 ou 2, **caractérisé en ce qu'**une enveloppe d'extinction est formée par étirement de l'enveloppe convexe avec un premier facteur d'étirement, et **en ce qu'**une enveloppe d'activation est formée par étirement de l'enveloppe convexe avec un deuxième facteur d'étirement qui est supérieur au premier facteur d'étirement.

4. Capteur optique (1) selon la revendication 3, **caractérisé en ce que**, pendant le mode de fonctionnement, des points de mesure sont déterminés pour des valeurs de mesure déterminées de la sonde de triangulation en calculant la somme des quotients et la somme des différences, lesquels points de mesure sont évalués avec l'enveloppe d'activation et l'enveloppe de désactivation, l'arrière-plan étant considéré comme détecté dans le cas de points de mesure situés à l'intérieur de l'enveloppe de désactivation et un objet (8) devant l'arrière-plan étant considéré comme détecté dans le cas de points de mesure situés à l'extérieur de l'enveloppe d'activation.

5. Capteur optique (1) selon l'une des revendications 3 ou 4, **caractérisé en ce que** les facteurs d'allongement dépendent des écarts types des points de mesure déterminés dans le processus d'apprentissage.

6. Capteur optique (1) selon l'une des revendications 1 à 5, **caractérisé en ce que**, pendant le fonctionnement, un signal de commutation binaire est généré dans l'unité d'évaluation en fonction des valeurs mesurées des scanners de triangulation, dont les états de commutation indiquent s'il y a une détection de l'arrière-plan ou une détection d'un objet (8) devant l'arrière-plan.

7. Capteur optique (1) selon la revendication 6, **caractérisé en ce que** l'enveloppe de coupure et l'enveloppe d'activation forment une hystérésis de commutation pour le signal de commutation.

8. Capteur optique (1) selon l'une quelconque des revendications 1 à 7, **caractérisé en ce que** le récepteur à résolution spatiale (4) est formé par un élément PSD.

9. Capteur optique (1) selon l'une quelconque des revendications 1 à 8, **caractérisé en ce que** les émetteurs (3a - c) sont disposés le long d'une ligne droite perpendiculaire à l'axe longitudinal du récepteur à résolution de position (4).

10. Capteur optique (1) selon l'une quelconque des revendications 1 à 9, **caractérisé en ce que** les émetteurs (3a - c) émettent des impulsions lumineuses transmises.

11. Capteur optique (1) selon l'une quelconque des revendications 1 à 10, **caractérisé en ce que** les signaux de sortie du récepteur à résolution de position (4) sont échantillonnés avec un convertisseur analogique-numérique, les signaux générés par le convertisseur analogique-numérique étant amenés à l'unité d'évaluation.

12. Capteur optique (1) selon l'une quelconque des revendications 1 à 11, **caractérisé en ce qu'**un fond statique est prévu.

13. Capteur optique (1) selon l'une quelconque des revendications 1 à 11, **caractérisé en ce qu'**il est prévu un fond mobile par rapport à celui-ci.

14. Capteur optique (1) selon la revendication 13, **caractérisé en ce que** le fond est formé par une bande transporteuse (9).

15. Procédé d'exploitation d'un capteur optique (1) selon la revendication 1, **caractérisé en ce que** le capteur optique (1) détecte des objets (8) sur un arrière-plan, **en ce qu'**une somme de différences et une somme de quotients sont formées dans l'unité d'évaluation à partir des signaux de sortie des capteurs de triangulation, la somme de différences étant la somme des valeurs de différence des signaux de sortie actuels et d'une valeur moyenne du signal de sortie respectif de tous les capteurs de triangulation, et la somme de quotients étant la somme des quotients des différences et des sommes des signaux de sortie de tous les capteurs de triangulation, **en ce que** la somme des quotients et la somme des différences forment les axes de coordonnées d'un espace vectoriel bidimensionnel, **en ce que**, dans une opération d'apprentissage, le fond seul est mesuré plusieurs fois à l'aide de la sonde de triangulation et, pour les valeurs de mesure obtenues dans le processus, des points de mesure sont obtenus dans l'espace vectoriel par calcul de la somme des quotients et de la somme des différences et une enveloppe convexe est formée pour ceux-ci, et **en ce que**, pendant un mode de fonctionnement suivant le processus d'apprentissage, un objet (8) est détecté devant l'arrière-plan du fait que ses points de mesure se trouvent en dehors de l'enveloppe convexe.
